(19) Europäisches Patentamt
European Patent Office
Office européen des brevets

(11) **EP 3 554 682 B1**

(12) **FASCICULE DE BREVET EUROPÉEN**

(45) Date de publication et mention
de la délivrance du brevet:
**02.09.2020 Bulletin 2020/36**

(51) Int Cl.:
***B01J 19/24*** *(2006.01)* ***B22F 3/105*** *(2006.01)*
***F28D 9/00*** *(2006.01)*

(21) Numéro de dépôt: **17816916.5**

(22) Date de dépôt: **23.11.2017**

(86) Numéro de dépôt international:
**PCT/FR2017/053228**

(87) Numéro de publication internationale:
**WO 2018/109299 (21.06.2018 Gazette 2018/25)**

(54) **ECHANGEUR-RÉACTEUR COMPRENANT DES CONNECTEURS AVEC SUPPORTS**

TAUSCHERREAKTOR MIT VERBINDERN MIT TRÄGERN

EXCHANGER-REACTOR COMPRISING CONNECTORS WITH SUPPORTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.12.2016 FR 1662479**

(43) Date de publication de la demande:
**23.10.2019 Bulletin 2019/43**

(73) Titulaire: **L'Air Liquide Société Anonyme pour
l'Etude et
l'Exploitation des Procédés Georges Claude
75321 Paris (FR)**

(72) Inventeurs:
• **FAURE, Raphaël**
**78470 Saint Rémy les Chevreuse (FR)**
• **DUBET, Olivier**
**78530 Buc (FR)**
• **DEL GALLO, Pascal**
**91410 Dourdan (FR)**
• **FLIN, Matthieu**
**92170 Vanves (FR)**

(74) Mandataire: **Debecker, Isabelle Virginie
Air Liquide
Direction de la Propriete Intellectuelle
75, Quai d'Orsay
75321 Paris Cedex 07 (FR)**

(56) Documents cités:
**EP-A1- 3 015 166       WO-A1-2011/148067
WO-A1-2016/128647**

EP 3 554 682 B1

## Description

La présente invention est relative aux échangeurs-réacteurs millistructurés d'un seul tenant, c'est-à-dire ne présentant pas d'interface d'assemblage.

Actuellement le procédé le plus répandu de production de gaz de synthèse est le vaporeformage du méthane. Cette réaction est catalytique et endothermique. La chaleur nécessaire pour la réaction est obtenue par combustion dans un four radiatif. Le gaz de synthèse est donc obtenu à haute température (aux environs de 900°C). Une optimisation déjà largement répandue propose le déroulement de la réaction dans un échangeur-réacteur millistructuré afin d'améliorer les transferts de chaleur et de matière au sein du réacteur.

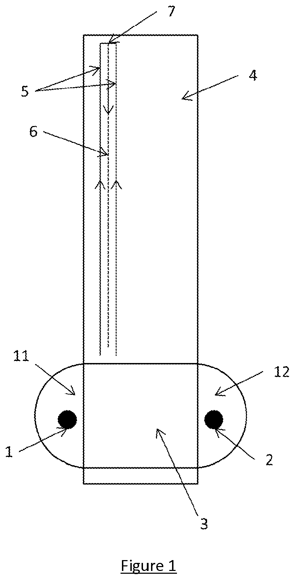

Le réacteur de reformage dont il est question dans cette invention est un ensemble d'un seul tenant, constitué de différentes parties, représentées par la figure 1. Par « réacteur d'un seul tenant » on entend un réacteur ne présentant pas d'interface d'assemblage. L'entrée 1 et la sortie 2 de l'échangeur-réacteur sont reliés respectivement à un connecteur d'entrée 11 et de sortie 12 eux-mêmes directement reliés à la zone de distribution 3, qui alimente la zone d'échange 4. La zone d'échange 4 est constituée de canaux droits et parallèles : on distingue parmi ces canaux droits les canaux réactifs 5, les canaux produits 6 et les jonctions 7 entre deux canaux réactifs 5 et un canal produit. Par « canaux réactifs » on entend les canaux où a lieu une réaction catalytique et par « canaux produits » les canaux permettant la circulation du flux produit. Seuls l'entrée 1, la zone de distribution 3 et les canaux réactifs 6 sont enduits d'un catalyseur 8. En plus du dépôt de catalyseur 8, ces canaux peuvent être également enduits d'un revêtement protecteur contre la corrosion 9 appliqué à la surface 10 des canaux réactifs.

Un tel échangeur-réacteur est divulgué dans le document WO-A-2016128647.

Les connecteurs d'entrée 11 et de sortie 12 sont définis comme un volume vide à au moins 50%, de préférence à au moins 70% et assurant respectivement la liaison entre l'entrée et la zone de distribution, et la zone de distribution et la sortie.

Par « zone de distribution » on entend un volume organisé de manière à distribuer au mieux les flux entrant ou sortant des canaux de la zone d'échange.

Pour permettre la fabrication en une seule étape d'un échangeur-réacteur tel que décrit ci-dessus, il est nécessaire que les connecteurs d'entrée et de sortie soient fabriqués par méthode additive en même temps que la zone de distribution et de la zone d'échange.

Cependant sauf à limiter les possibilités de positionnement ou la taille des connecteurs, aucune solution à l'heure actuelle n'existe pour permettre la fabrication des connecteurs en même temps que celle de la zone d'échange et de la zone de distribution.

Partant de là, un problème qui se pose est de fournir un échangeur-réacteur amélioré et/ou un procédé amélioré permettant la fabrication des connecteurs en même temps que celle de la zone d'échange et de la zone de distribution.

Une solution de la présente invention est un échangeur-réacteur d'un seul tenant comprenant de bas en haut en prenant le sens de fabrication :

- une zone de distribution 3 ;
- un connecteur d'entrée 11 et un connecteur de sortie 12 ayant chacun la forme d'un demi-cylindre et étant accolés de part et d'autre à la zone de distribution ;
- une entrée 1 située sur la face avant du connecteur d'entrée ;
- une sortie 2 située sur la face avant du connecteur de sortie ;
- une zone d'échange constituée de canaux réactifs 5 et de canaux produits 6 ;

avec chaque connecteur comprenant des supports dans leur partie supérieure interne.

Notons que les canaux dont il est question sont des canaux millimétriques.

Selon le cas, le réacteur-échangeur selon l'invention peut présenter une ou plusieurs des caractéristiques suivantes :

- la zone de distribution comprend sur sa face accolée au connecteur d'entrée des entrées de flux organisés suivant plusieurs axes verticaux ; les supports compris dans la partie supérieure interne du connecteur d'entrée ont une face accolée à la zone de distribution et une face accolée à la face supérieure interne du connecteur d'entrée; et les supports sont intercalés entre lesdits différents axes verticaux ;
- la zone de distribution comprend sur sa face accolée au connecteur de sortie des sorties de flux organisés suivant plusieurs axes verticaux ; les supports compris dans la partie supérieure interne du connecteur de sortie ont une face accolée à la zone de distribution et une face accolée à la face supérieure interne du connecteur d'entrée; et les supports sont intercalés entre lesdits différents axes verticaux ;

- les supports ont une forme de secteur de disque présentant un angle compris entre 30 et 60°, de préférence compris entre 40 et 50° ;
- les connecteurs présentent un diamètre interne « D » et les supports en forme de secteur de disque présentent un rayon « d » tel que $\frac{1}{4}D \leq d \leq \frac{1}{3}D$.
- les supports présentent une porosité comprise entre 25 et 45%, de préférence une porosité comprise entre 35% et 45%.
- les supports présentent une épaisseur inférieure à 2 mm, de préférence inférieure à 1 mm, plus préférentiellement inférieure à 0,8 mm
- les entrées de flux et/ou sorties de flux de la zone de distribution présentent un diamètre hydraulique compris entre 0,3 et 4 mm, de préférence 0,5 et 2 mm

- ledit échangeur-réacteur est fabriqué en un seul bloc par fabrication additive. De préférence, la méthode de fabrication additive met en œuvre comme matière de base au moins une poudre métallique de taille micrométrique.

Les canaux de la zone d'échange se répartissent sur plusieurs étages. Il est entendu par « étage » un ensemble de canaux positionnés sur un même niveau. Les canaux sont séparés par des parois. Il est entendu par « paroi » une cloison de séparation entre deux canaux consécutifs. Le nombre de canaux, leurs dimensions et leurs dispositions sont déterminés pour pouvoir atteindre les performances attendues en termes de transfert de chaleur, de perte de charge et de conversion. Trois types d'étage peuvent être distingués selon le fluide circulant dans les canaux de cet étage:

- Les étages comportant des canaux dit "réactifs" dans lesquels circule généralement, dans le cas du vaporeformage, un mélange charge hydrocarbonée et vapeur d'eau,
- Les étages comportant des canaux dits "produits" dans lesquels circulent les produits de la réaction de vaporeformage. Les produits de la réaction de vaporeformage cèdent au mélange charge hydrocarbonée-vapeur d'eau une partie de la chaleur nécessaire à la réaction de vaporeformage ce qui permet d'améliorer l'efficacité du procédé,
- Les étages comportant des canaux dits "d'apport de chaleur" dans lesquels circule un fluide caloporteur permettant d'apporter la chaleur nécessaire à la réaction de vaporeformage.

Un échangeur-réacteur est constitué de l'empilement de ces trois types d'étages.

Les flux sont amenés dans les canaux via une zone dite de distribution. La zone de distribution permet une répartition homogène des flux entre les canaux qui lui sont accessibles.

La méthode de fabrication additive peut mettre en œuvre des poudres métalliques de taille micrométrique qui sont fondues par un ou plusieurs lasers afin de fabriquer des pièces finies de formes complexes en trois dimensions. La pièce se construit couche par couche, les couches sont de l'ordre de 50 $\mu$m, selon la précision des formes souhaitées et le taux de dépôt voulu. Le métal à fondre peut être apporté soit par lit de poudre ou soit par une buse d'aspersion. Les lasers utilisés pour fondre localement la poudre sont soit des lasers YAG, fibres ou CO2 et la fusion des poudres s'effectue sous gaz inerte (Argon, Hélium, etc.). La présente invention ne se limite pas à une seule technique de fabrication additive mais elle s'applique à l'ensemble des techniques connues.

Les techniques de fabrication additive permettent in fine d'obtenir des pièces dites « massives » qui à contrario des techniques d'assemblages telles que le brasage diffusion ou le soudage diffusion ne présentent pas d'interfaces d'assemblages entre chaque plaque gravée. Cette propriété va dans le sens de la tenue mécanique de l'appareil en éliminant par construction la présence de lignes de fragilisation et en éliminant par la-même une source de défaut potentiel. L'obtention de pièces massives par fabrication additive et l'élimination des interfaces de brasage ou de soudage diffusion permet d'envisager de nombreuses possibilités de design sans se limiter à des géométries de parois étudiées pour limiter l'impact d'éventuels défauts d'assemblage tels que des discontinuités dans le joints brasés ou dans les interfaces soudées-diffusées.

La fabrication additive permet de réaliser des formes inenvisageables par les méthodes de fabrication traditionnelles et ainsi la fabrication des connecteurs des échangeurs-réacteurs ou échangeurs milli-structurés peut se faire dans la continuité de la fabrication du corps des appareils. Ceci permet alors de ne pas réaliser d'opération de soudage des connecteurs sur le corps et ainsi d'éliminer une source d'altération de l'intégrité structurelle de l'équipement.

Les supports dans la partie supérieure interne des connecteurs permettent d'assurer la fabrication des connecteurs de l'échangeur-réacteur par méthode additive.

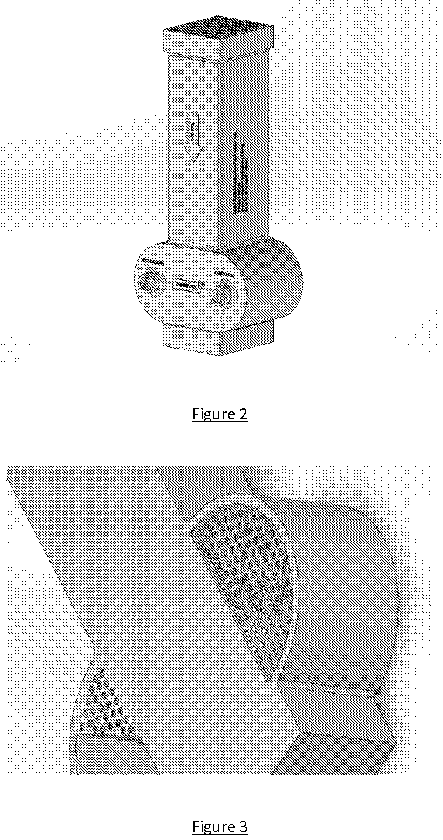

Les supports doivent être positionnés dans les connecteurs là où la fabrication par méthode additive va nécessiter un supportage. Par exemple dans le cas d'un échangeur-réacteur fabriqué à la verticale par méthode additive tel que présenté sur la Figure 2.

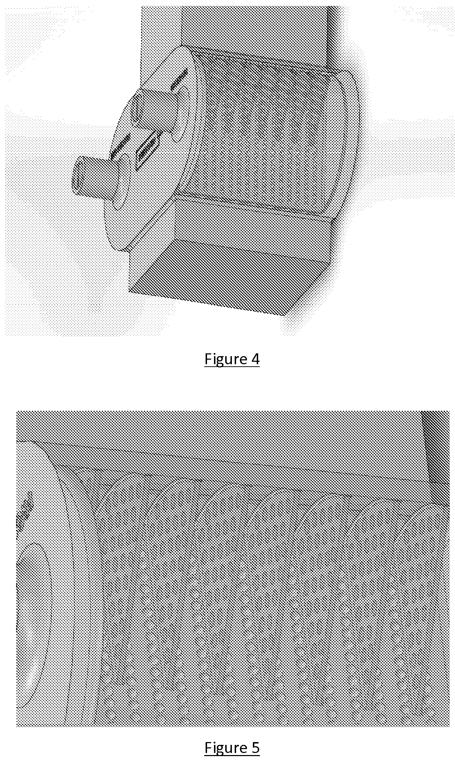

Les supports des connecteurs sont situés dans la partie supérieure interne des connecteurs. Pour impacter au minimum le procédé de fabrication et ne pas perturber la circulation des flux et leur distribution au niveau des entrée et sorties de flux de la zone de distribution, les supports se positionnent entre les entrées et sorties, ce qui impose leur épaisseur (cf. Figures 3, 4 et 5).

D'autre part pour ne pas perturber la circulation des flux les supports sont de préférence aérées et présentent une porosité élevée comprise entre 25 et 45%, avec une valeur idéale de 40% (calculé comme le rapport du volume de l'ensemble des trous des supports sur le volume total occupé par un support).

La présente invention a également pour objet un procédé de vaporeformage d'une charge hydrocarbonée mettant en œuvre un réacteur-échangeur selon l'invention. Notons que les performances de l'échangeur-réacteur et donc la bonne réalisation du procédé de vaporeformage ne sont pas altérés par la présence de supports.

Les exemples ci-dessous ont pour objectif de montrer l'importance des supports lors de la fabrication d'un échangeur-réacteur par méthode additive.

Exemple selon l'invention

Prenons l'exemple d'un réacteur-échangeur en Inconel 625 pour la production de 5 Nm3/h (cas du pilote)d'hydrogène destiné à alimenter une pile à combustible pour produire l'électricité et l'eau chaude d'une habitation. Les connecteurs de l'échangeur-réacteur peuvent avoir un diamètre compris entre 15 mm et 150 mm. Un diamètre de 80 mm est choisi.

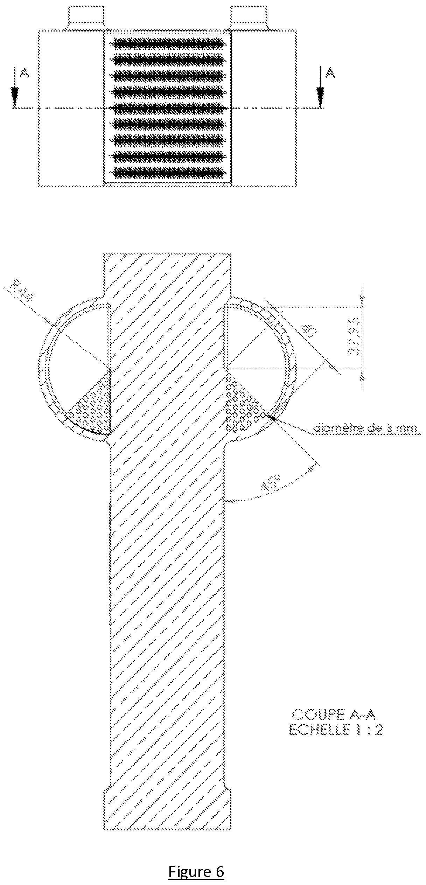

La présence de supports permet d'obtenir l'échangeur-réacteur illustré par la figure 6.

Exemple comparatif

Pour la fabrication de cet échangeur-réacteur, nous gardons les caractéristiques de l'échangeur-réacteur selon l'invention à l'exception des supports qui seront supprimés.

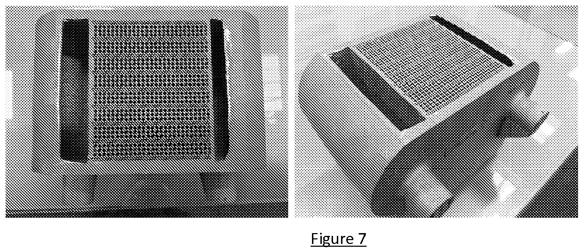

Avec l'absence de supports nous obtenons l'échangeur réacteur illustré figure 7.

Autrement dit, en l'absence de supports nous observons l'impossibilité de fermer les connecteurs entrées et sortie 11 et 12 lors de la fabrication de l'échangeur-réacteur par méthode additive, ce qui conduit à une mise en rebu de l'échangeur-réacteur.

Conclusion des exemples

Pour pouvoir réaliser à la verticale par impression 3D, un échangeur-réacteur tel que précédemment décrit et ainsi maximiser la longueur d'échange réalisable dans la machine d'impression 3D. Il est nécessaire de prévoir dans les connecteurs entrées et sortie des supports spécifiques qui resteront en place une fois la pièce réalisée et donc qui devront perturber au minimum l'écoulement des fluides une fois la pièce en opération. En l'absence de ces supports et dans la nécessité d'amener/extraire un ou plusieurs fluides de l'une des faces latérales, il est nécessaire de prévoir des supports spécifiques très aérés, tels que définis dans la présente demande.

**Revendications**

1.  Echangeur-réacteur d'un seul tenant comprenant de bas en haut en prenant le sens de fabrication :

    - une zone de distribution (3) ;
    - un connecteur d'entrée (11) et un connecteur de sortie (12) ayant chacun la forme d'un demi-cylindre et étant accolés de part et d'autre à la zone de distribution et formés d'un volume vide à au moins 50 % ;
    - une entrée (1) située sur la face avant du connecteur d'entrée ;
    - une sortie (2) située sur la face avant du connecteur de sortie ;

    - une zone d'échange constituée de canaux réactifs (5) et de canaux produits (6) ;

    avec chaque connecteur comprenant des supports dans leur partie supérieure interne.

2.  Echangeur-réacteur selon la revendication 1, **caractérisé en ce que** :

    - la zone de distribution comprend sur sa face accolée au connecteur d'entrée des entrées de flux organisés suivant plusieurs axes verticaux ;
    - les supports compris dans la partie supérieure interne du connecteur d'entrée ont une face accolée à la zone de distribution et une face accolée à la face supérieure interne du connecteur d'entrée ; et
    - les supports sont intercalés entre lesdits différents axes verticaux.

3.  Echangeur-réacteur selon l'une des revendications 1 ou 2, **caractérisé en ce que** :

    - la zone de distribution comprend sur sa face accolée au connecteur de sortie des sorties de flux organisés suivant plusieurs axes verticaux ;
    - les supports compris dans la partie supérieure interne du connecteur de sortie ont une face accolée à la zone de distribution et une face accolée à la face supérieure interne du connecteur d'entrée ; et
    - les supports sont intercalés entre lesdits différents axes verticaux.

4.  Echangeur-réacteur selon l'une des revendications 1 à 3, **caractérisé en ce que** les supports ont une forme de secteur de disque présentant un angle compris entre 30 et 60°, de préférence compris entre 40 et 50°.

5.  Echangeur-réacteur selon la revendication 4, **caractérisé en ce que** les connecteurs présentent un diamètre interne « D » et les supports en forme de secteur de disque présentent un rayon « d » tel que

    $$\frac{1}{4}D \le d \le \frac{1}{3}D.$$

6.  Echangeur-réacteur selon l'une des revendications 1 à 5, **caractérisé en ce que** les supports présentent une porosité comprise entre 25 et 45%, de préférence une porosité comprise entre 35% et 45%.

7.  Echangeur-réacteur selon l'une des revendications 1 à 6, **caractérisé en ce que** les supports présentent une épaisseur inférieure à 2 mm, de préférence inférieure à 1 mm, plus préférentiellement inférieure à 0,8 mm.

**8.** Echangeur-réacteur selon l'une des revendications 1 à 7, **caractérisé en ce que** les entrées de flux et/ou sorties de flux de la zone de distribution présentent un diamètre hydraulique compris entre 0,3 et 4 mm, de préférence 0,5 et 2 mm.

**9.** Echangeur-réacteur selon l'une des revendications 1 à 8, **caractérisé en ce que** ledit échangeur-réacteur est fabriqué en un seul bloc par fabrication additive.

**10.** Procédé de vaporeformage d'une charge hydrocarbonée mettant en œuvre un réacteur-échangeur selon l'une des revendications 1 à 9.

**Patentansprüche**

**1.** Einteiliger Austauscher-Reaktor, umfassend von unten nach oben in der Fertigungsrichtung:

- einen Verteilerbereich (3);
- einen Einlassverbinder (11) und einen Auslassverbinder (12), die jeweils die Form eines Halbzylinders aufweisen und auf beiden Seiten mit dem Verteilerbereich verbunden sind und mit einem Leervolumen von mindestens 50 % gebildet sind;
- einen Einlass (1), der sich auf der Vorderseite des Einlassverbinders befindet;
- einen Auslass (2), der sich auf der Vorderseite des Auslassverbinders befindet;
- einen Austauschbereich, der aus reaktiven Kanälen (5) und Produktkanälen (6) besteht;

wobei jeder Verbinder in seinem oberen inneren Abschnitt Halterungen umfasst.

**2.** Austauscher-Reaktor nach Anspruch 1, **dadurch gekennzeichnet, dass**:

- der Verteilerbereich auf seiner mit dem Einlassverbinder verbundenen Fläche Strömungseinlässe umfasst, die entlang mehrerer vertikaler Achsen angeordnet sind;
- die im oberen inneren Abschnitt des Einlassverbinders umfassten Halterungen eine mit dem Verteilerbereich verbundene Fläche und eine mit der oberen inneren Fläche des Einlassverbinders verbundene Fläche aufweisen und
- die Halterungen zwischen den verschiedenen vertikalen Achsen eingefügt sind.

**3.** Austauscher-Reaktor nach einem der Ansprüche 1 oder 2, **dadurch gekennzeichnet, dass**:

- der Verteilerbereich auf seiner mit dem Auslassverbinder verbundenen Fläche Strömungsauslässe umfasst, die entlang mehrerer vertikaler Achsen angeordnet sind;
- die im oberen inneren Abschnitt des Auslassverbinders umfassten Halterungen eine mit dem Verteilerbereich verbundene Fläche und eine mit der oberen inneren Fläche des Einlassverbinders verbundene Fläche aufweisen und
- die Halterungen zwischen den verschiedenen vertikalen Achsen eingefügt sind.

**4.** Austauscher-Reaktor nach einem der Ansprüche 1 bis 3, **dadurch gekennzeichnet, dass** die Halterungen eine Form eines Kreisscheibensektors aufweisen, der einen Winkel zwischen 30 und 60 °, vorzugsweise zwischen 40 und 50° aufweist.

**5.** Austauscher-Reaktor nach Anspruch 4, **dadurch gekennzeichnet, dass** die Verbinder einen Innendurchmesser "D" aufweisen und die Halterungen in Form eines Kreisscheibensektors einen Radius "d" so aufweisen, dass

$$\frac{1}{4}D \leq d \leq \frac{1}{3}D.$$

**6.** Austauscher-Reaktor nach einem der Ansprüche 1 bis 5, **dadurch gekennzeichnet, dass** die Halterungen eine Porosität zwischen 25 und 45 %, vorzugsweise eine Porosität zwischen 35 % und 45 % aufweisen.

**7.** Austauscher-Reaktor nach einem der Ansprüche 1 bis 6, **dadurch gekennzeichnet, dass** die Halterungen eine Dicke von weniger als 2 mm, vorzugsweise weniger als 1 mm, bevorzugter weniger als 0,8 mm aufweisen.

**8.** Austauscher-Reaktor nach einem der Ansprüche 1 bis 7, **dadurch gekennzeichnet, dass** die Strömungseinlässe und/oder Strömungsauslässe des Verteilerbereichs einen hydraulischen Durchmesser zwischen 0,3 und 4 mm, vorzugsweise zwischen 0,5 und 2 mm aufweisen.

**9.** Austauscher-Reaktor nach einem der Ansprüche 1 bis 8, **dadurch gekennzeichnet, dass** der Austauscher-Reaktor durch additive Fertigung einteilig hergestellt wird.

**10.** Verfahren zum Dampf-Reformierung eines Kohlenwasserstoff-Einsatzmaterials unter Verwendung eines Austauscher-Reaktors nach einem der Ansprüche 1 bis 9.

**Claims**

**1.** Single-component exchanger-reactor comprising, from bottom to top, in the direction of production:

- a dispensing area (3);
- an inflow connector (11) and an outflow connector (12), which each have the form of a half cylinder and are arranged next to the dispensing region, on either side thereof and formed from a void volume of at least 50%;
- an inlet (1) arranged on the front face of the inflow connector;
- an outlet (2) arranged on the front face of the outflow connector;
- an exchange area consisting of reactive channels (5) and product channels (6);

with each connector comprising supports in their inner upper part.

2. Exchanger-reactor according to claim 1, **characterised in that**:

- the dispensing area comprises on its face next to the inflow connector of the inflows organised according to several vertical axes;
- the supports comprised in the inner upper part of the inflow connector have a face next to the dispensing area and a face next to the inner upper face of the inflow connector; and
- the supports are inserted between said different vertical axes.

3. Exchanger-reactor according to one of claims 1 or 2, **characterised in that**:

- the dispensing area comprises on its face next to the outflow connector of the outflows organised according to several vertical axes;
- the supports comprised in the inner upper part of the outflow connector have a face next to the dispensing area and a face next to the inner upper face of the inflow connector; and
- the supports are inserted between said different vertical axes.

4. Exchanger-reactor according to one of claims 1 to 3, **characterised in that** the supports have a disc sector shape having an angle comprised between 30° and 60°, preferably comprised between 40° and 50°.

5. Exchanger-reactor according to claim 4, **characterised in that** the connectors have an inner diameter "D" and the supports in the shape of a disc sector have a radius "d" such that $\frac{1}{4} D \leq d \leq \frac{1}{3} D$.

6. Exchanger-reactor according to one of claims 1 to 5, **characterised in that** the supports have a porosity comprised between 25% and 45%, preferably a porosity comprised between 35% and 45%.

7. Exchanger-reactor according to one of claims 1 to 6, **characterised in that** the supports have a thickness of less than 2mm, preferably less than 1mm, more preferentially less than 0.8mm.

8. Exchanger-reactor according to one of claims 1 to 7, **characterised in that** the inflows and/or outflows of the dispensing area have a hydraulic diameter comprised between 0.3mm and 4mm, preferably 0.5mm and 2mm.

9. Exchanger-reactor according to one of claims 1 to 8, **characterised in that** said exchanger-reactor is manufactured as a single component by additive manufacturing.

10. Method for steam reforming a hydrocarbon feed implementing a reactor-exchanger according to one of claims 1 to 9.

Figure 1

Figure 2

Figure 3

Figure 4

Figure 5

COUPE A-A
ECHELLE 1 : 2

diamètre de 3 mm

45°

Figure 6

Figure 7

**EP 3 554 682 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016128647 A